# EUROPÄISCHE PATENTANMELDUNG

(11) **EP 2 246 671 A1**
(43) Veröffentlichungstag der Anmeldung: **03.11.2010**
(21) Anmeldenummer: 10160918.8
(22) Anmeldetag: 23.04.2010
(51) Int. Cl.: G01F 1/44, G01P 5/14

(54) **Sensoreinrichtung zur Erfassung von Differenzdrücken eines strömenden Mediums in einem Kanal**

(30) Priorität: 27.04.2009 DE 202009006051 U
(71) Anmelder: TROX GmbH, 47506 Neukirchen-Vluyn (DE)
(72) Erfinder: Stefan, Lange, 47506, Neukirchen-Vluyn (DE); Schicks, Heike, 47802, Krefeld (DE); Leitner, Daniel, 41751, Viersen (DE)
(74) Vertreter: Dönges, Jörg

(57) **Zusammenfassung**

Die Erfindung betrifft eine Sensoreinrichtung zur Erfassung von Differenzdrücken eines strömenden Mediums in einem Kanal einer klimatechnischen Anlage mit einer anströmseitigen, ringförmigen, zumindest eine Öffnung aufweisenden Kammer und einer in Strömungsrichtung dahinter angeordneten abströmseitigen ringförmigen, zumindest eine Öffnung aufweisenden Kammer, wobei die Öffnungen über die an- und abströmseitige Kammer mit einer Mess- und/oder Regelvorrichtung verbunden sind, wobei die Messeinrichtung ihrerseits mit einer Auswerteeinrichtung verbunden sein kann, und wobei eine den Strömungsquerschnitt des Kanals um einen Teilbereich verringernde Strömungsbarriere zwischen den Öffnungen angeordnet ist und der verringerte Strömungsquerschnitt geringer ist als der Strömungsquerschnitt zumindest im Bereich der anströmseitigen Öffnung. Um eine Sensoreinrichutng anzugeben, die u.a. auch reinigbar ist, soll die Sensoreinrichtung als aus dem Kanal herausnehmbarer Einschub ausgebildet sein und als Strömungsbarriere soll ein umlaufendes Ringelement vorgesehen sein, an dessen innerem Ringrand sowohl eine sich in anströmseitiger Richtung erstreckende Wandung als auch eine sich in abströmseitiger Richtung erstreckende Wandung vorgesehen ist, die jeweils zusammen mit dem Ringelement und der Wandung des Kanals und gegebenenfalls mit einem weiteren Element jeweils die an- und die abströmseitige Kammer bilden, wobei in der anströmseitigen Kammer zumindest eine Öffnung im Bereich der nicht an das Ringelement angrenzenden umlaufenden Kante der Wandung angeordnet ist und wobei in der abströmseitigen Kammer zumindest eine Öffnung vorzugsweise im Bereich des geringsten verbleibenden Strömungsquerschnittes angeordnet ist und wobei im eingeschobenen Zustand sowohl der äußere Ringrand des Ringelementes einerseits als auch die nicht an das Ringelement angrenzende umlaufende Kante der Wandung der abströmseitigen Kammer bzw. das weitere Element andererseits gegenüber der Wandung des Kanals abgedichtet sind.

## Beschreibung

Die Erfindung betrifft eine Sensoreinrichtung zur Erfassung von Differenzdrücken eines strömenden Mediums in einem Kanal einer klimatechnischen Anlage mit einer anströmseitigen, ringförmigen, zumindest eine Öffnung aufweisenden Kammer und einer in Strömungsrichtung dahinter angeordneten abströmseitigen ringförmigen, zumindest eine Öffnung aufweisenden Kammer, wobei die Öffnungen über die an- und abströmseitige Kammer mit einer Mess- und/oder Regelvorrichtung verbunden sind, wobei die Messeinrichtung ihrerseits mit einer Auswerteeinrichtung verbunden sein kann, und wobei eine den Strömungsquerschnitt des Kanals um einen Teilbereich verringernde Strömungsbarriere zwischen den Öffnungen angeordnet ist und der verringerte Strömungsquerschnitt geringer ist als der Strömungsquerschnitt zumindest im Bereich der anströmseitigen Öffnung.

Sensoreinrichtungen werden zur Erfassung von Differenzdrücken in Kanälen, wie Strömungskanälen eingesetzt. Sie weisen zumindest zwei in gegenseitigem Abstand in Strömungsrichtung hintereinander angeordnete Öffnungen auf, die beispielsweise mit einer Auswerte- und/oder Regelvorrichtung verbunden sein können. Aus der ermittelten Druckdifferenz, die ein Maß für den Durchfluss pro Zeiteinheit ist, kann beispielsweise der Volumenstrom oder auch die Strömungsgeschwindigkeit bestimmt werden. Als Auswerteeinrichtung kann im einfachsten Fall eine Anzeige, wie z.B. ein Druckmanometer, vorgesehen sein, das die Druckdifferenz anzeigt. Es können aber auch Transmitter eingesetzt werden, die die ermittelte Druckdifferenz in ein elektrisches Signal umwandeln, das dann gegebenenfalls an eine Regelvorrichtung weitergeleitet wird. Damit überhaupt eine Druckdifferenz in den Öffnungen bestimmt werden kann, ist zwischen beiden Öffnungen eine in den Strömungskanal hineinragende Strömungsbarriere vorgesehen.

Im Stand der Technik ist eine Sensoreinrichtung, die eine abströmseitige und eine anströmseitige Kammer mit jeweils zumindest einer Öffnung aufweist, bekannt. Diese Sensoreinrichtung ist dabei fest mit der Innenwandung des Kanals verbunden. Problematisch ist der Einsatz einer solchen Sensoreinrichtung in Kanälen mit einem strömenden Medium, das insbesondere staub- oder flüssigkeitsbelastet, wie z. B. infolge einer Kondensatbildung, ist. Dies tritt insbesondere in chemischen Labors, bei der Tablettenherstellung oder aber in Abluftsystemen von Krankenhäusern mit hohen Partikelanteilen auf. Hier sind derartige Sensoreinrichtungen nur bedingt einsetzbar, da sie mit der Zeit verunreinigen können, was zu einer Verfälschung der Messwerte führen kann. Eine Reinigung bekannter Sensoreinrichtung ist nur schwer möglich.

Aufgabe der Erfindung ist es daher, eine Sensoreinrichutng anzugeben, mit der die vorbeschriebenen Nachteile vermieden werden und die auch reinigbar ist, so dass sie auch in staub- und/oder flüssigkeitbelasteten Luftströmungen einsetzbar ist. Gleichzeitig soll die Sensoreinrichtung einfach montierbar sein.

Diese Aufgabe wird dadurch gelöst, dass die Sensoreinrichtung als aus dem Kanal herausnehmender Einschub, wobei das Herausnehmen der Sensoreinrichtung selbst ohne Werkzeug möglich ist, ausgebildet ist und als Strömungsbarriere ein umlaufendes Ringelement vorgesehen ist, an dessen innerem Ringrand sowohl eine sich in anströmseitiger Richtung erstreckende Wandung als auch eine sich in abströmseitiger Richtung erstreckende Wandung vorgesehen ist, die jeweils zusammen mit dem Ringelement und der Wandung des Kanals und gegebenenfalls mit einem weiteren Element jeweils die an- und die abströmseitige Kammer bilden, wobei in der anströmseitigen Kammer zumindest eine Öffnung im Bereich der nicht an das Ringelement angrenzenden umlaufenden Kante der Wandung angeordnet ist und wobei in der abströmseitigen Kammer zumindest eine Öffnung vorzugsweise im Bereich des geringsten verbleibenden Strömungsquerschnittes angeordnet ist und wobei im eingeschobenen Zustand sowohl der äußere Ringrand des Ringelementes einerseits als auch die nicht an das Ringelement angrenzende umlaufende Kante der Wandung der abströmseitigen Kammer bzw. das weitere Element andererseits gegenüber der Wandung des Kanals abgedichtet sind.

Die erfindungsgemäße Ausgestaltung erlaubt ein einfaches Herausnehmen und späteres Widereinsetzen der Sensoreinrichtung, beispielsweise zu Zwecken der Reinigung infolge von Verschmutzungen. Vorzugsweise ist die Sensoreinrichtung aus Kunststoff, insbesondere Polypropylen (PP) gefertigt. Damit kann die Sensoreinrichtung nach der Demontage beispielsweise problemlos in einer Reinigungsmaschine gereinigt und anschließend wieder eingesetzt werden. Da sowohl die anströmseitige Kammer als auch die abströmseitige Kammer durch die Wandung des Kanals "mitgebildet" werden, sind beide Kammer im aus dem Kanal herausgezogenen Zustand offen und können so einfach gereinigt werden, da eventuelle Verunreinigung weggespült werden können.

Der Querschnitt der Sensoreinrichtung kann rund oder auch eckig ausgebildet sein. Bei der Sensoreinrichtung kann es sich beispielsweise um ein Spritzteil handeln, an dem lediglich noch die Dichtungen vorgesehen werden müssen.

Zur Abdichtung kann auf den äußeren Ringrand des Ringelementes einerseits und-/oder auf die nicht an das Ringelement angrenzende umlaufende Kante der Wandung der abströmseitigen Kammer bzw. auf die Kante des weiteren Elementes eine Dichtung beispielsweise aufgesetzt oder aufgespritzt sein. Als Dichtung bieten sich beispielsweise thermoplastische Elastomere TPE an.

In der anströmseitigen Kammer ist zumindest eine Öffnung im Bereich der nicht an das Ringelement angrenzenden umlaufenden Kante, d. h. im Bereich der freien Kante der Wandung vorgesehen. Vorzugsweise sind mehrere Öffnungen vorgesehen, die vorzugeweise gleichmäßig über den Umfang verteilt angeordnet sind.

Auch bietet sich an, wenn in der abströmseitigen Kammer mehrere Öffnungen, die ebenfalls vorzugsweise verteilt über den Umfang angeordnet sind, vorgesehen sind. Durch die erfindungsgemäße Anordnung der Öffnungen in der abströmseitigen Kammer einerseits und der anströmseitigen Kammer andererseits sind hohe Messgenauigkeiten gewährleistet, da die Öffnungen in der anströmseitigen Kammer gut angeströmt werden. Die Öffnungen in der abströmseitigen Kammer sind vorzugsweise in dem Bereich mit dem geringsten verbleibenden Strömungsquerschnitt, in dem die größte Geschwindigkeit herrscht, angeordnet.

Die anströmseitige Kammer kann in der nicht an das Ringelement angrenzenden umlaufenden Kante, insbesondere halbkreisförmig ausgebildete, Ausnehmungen als Öffnungen aufweisen. Selbstverständlich ist es aber auch möglich, dass die Öffnungen ausschließlich im Bereich der umlaufenden freien Kante der anströmseitigen Kammer angeordnet sind.

Die anströmseitige Wandung kann in Strömungsrichtung sehend trichterartig unter Verringerung des freien Strömungsquerschnittes zusammenlaufend ausgebildet sein.

Dabei kann die Kontur der anströmseitigen Wandung gekrümmt ausgebildet sein, wobei eine konvexe als auch eine konkave Ausgestaltung möglich ist.

Der an den inneren Rand des Ringelementes angrenzende Bereich der abströmseitigen Wandung kann zumindest in einem Teilbereich trichterartig in Strömungsrichtung gesehen auseinanderlaufend ausgebildet sein.

Dabei kann die Kontur der abströmseitigen Wandung gekrümmt ausgebildet sein. Auch hier ist eine konvexe oder auch eine konkave Ausgestaltung möglich.

Das weitere Element kann als ein weiteres Ringelement ausgebildet sein, dass zusammen mit dem Ringelement, der Wandung des Kanals und einem Teilbereich der abströmseitigen Wandung die abströmseitige Kammer bildet. Bei einer solchen Ausführungsform müssen nur die beiden Ringelemente durch geeignete Dichtungen gegenüber der Wandung des Kanals abgedichtet sein.

Im Folgenden wird ein in den Zeichnungen dargestelltes Ausführungsbeispiel der Erfindung erläutert. Es zeigen:
- Fig. 1: eine schräge Draufsicht auf eine erfindungsgemäße Sensoreinrichtung,
- Fig. 2: einen Schnitt durch den Gegenstand nach Figur 1 und
- Fig. 3: einen Schnitt durch einen Kanal einer klimatechnischen Anlage mit einer darin befindlichen erfindungsgemäßen Sensoreinrichtung.

In allen Figuren werden für gleiche bzw. gleichartige Bauteile übereinstimmende Bezugszeichen verwendet.

In den Figuren ist eine erfindungsgemäße Sensoreinrichtung dargestellt, die einen runden Querschnitt hat und beispielsweise aus Kunststoff gefertigt ist. Damit eignet sich die Sensoreinrichtung für die Verwendung in einem runden Kanal 1. Die Sensoreinrichtung weist eine an- und eine abströmseitige Kammer 2, 3 mit jeweils mehreren Öffnungen 4, 5 auf.

Zwischen den Öffnungen 4, 5 der an- und der abströmseitigen Kammer 2, 3 ist eine den Strömungsquerschnitt des Kanals 1 um einen Teilbereich verringernde Strömungsbarriere angeordnet, wobei der verringerte Strömungsquerschnitt geringer ist als der Strömungsquerschnitt zumindest im Bereich der anströmseitigen Öffnungen 4. Als Strömungsbarriere ist ein umlaufendes Ringelement 6 vorgesehen, das in dem dargestellten Ausführungsbeispiel die an- und die abströmseitige Kammer 2, 3 trennt. An dem inneren Ringrand weist das Ringelement 6 sowohl eine sich in anströmseitiger Richtung erstreckende Wandung 7 als auch eine sich in abströmseitiger Richtung erstreckende Wandung 8 auf.

Die anströmseitige Kammer 2 wird aus dem Ringelement 6, der anströmseitigen Wandung 7 und der Wandung des Kanals 1 gebildet. Die anströmseitige Wandung 7 ist in Strömungsrichtung (Pfeil 9) gesehen trichterartig unter Verringung des freien Strömungsquerschnittes zusammenlaufend ausgebildet, wobei die Kontur gekrümmt ausgebildet ist.

Auch die an den inneren Rand des Ringelementes 6 angrenzende abströmseitige Wandung 8 ist trichterartig in Strömungsrichtung (Pfeil 9) auseinanderlaufend ausgebildet, wobei die Kontur ebenfalls gekrümmt ausgebildet ist. Damit kommt der erfindungsgemäßen Sensoreinrichtung die Ausbildung einer Venturidüse zu.

Die abströmseitige Kammer 3 ist dabei von einem weiteren Element, der Wandung des Kanals 1, dem Ringelement 6 und einem Teilbereich der abströmseitigen Wandung 8 gebildet. Das weitere Element ist dabei als weiteres Ringelement 10 ausgebildet.

Wie den Figuren zu entnehmen ist, weist die anströmseitige Kammer 2 in der nicht an das Ringelement 6 angrenzenden umlaufenden Kante, d.h. in der freien, der Strömungsrichtung (Pfeil 9) entgegengesetzten Kante als Öffnungen 4 halbkreisförmig ausgebildete Ausnehmungen auf. Diese sind über den Umfang der Kante verteilt angeordnet.

Die Öffnungen 5 in der abströmseitigen Kammer 3 sind in dem Bereich angeordnet, in dem der Strömungsquerschnitt am geringsten und damit die Geschwindigkeit am höchsten ist. Auch die Öffnungen 5 der abströmseitigen Kammer 3 sind gleichmäßig über den Umfang verteilt angeordnet. Über Entnahmeöffnungen 11, 12 sind die an- und die abströmseitige Kammer 2, 3 mittelbar oder unmittelbar beispielsweise mit einer nicht dargestellten Mess- und/ oder Regelvorrichtung verbunden.

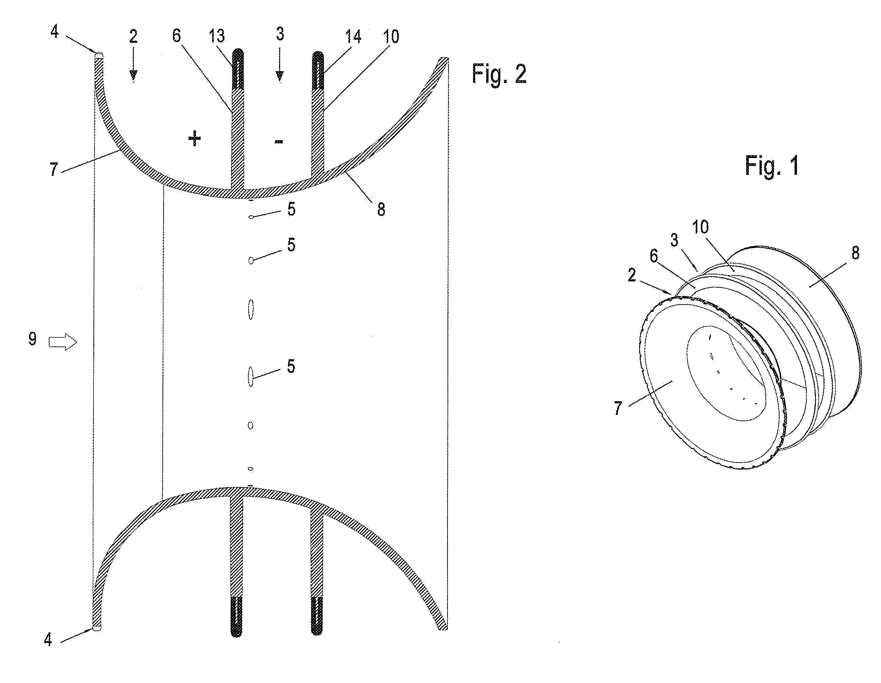

Wie in Figur 2 dargestellt, ist die Sensoreinrichtung in den erforderlichen Bereichen über das Ringelement 6 und das weitere Ringelement 10 gegenüber der Wandung des Kanals 1 abgedichtet. So weisen das Ringelement 6 und das weitere Ringelement 10 an ihrem jeweiligen äußeren Rand beispielsweise je eine aufgespritzte Dichtung 13, 14 auf.

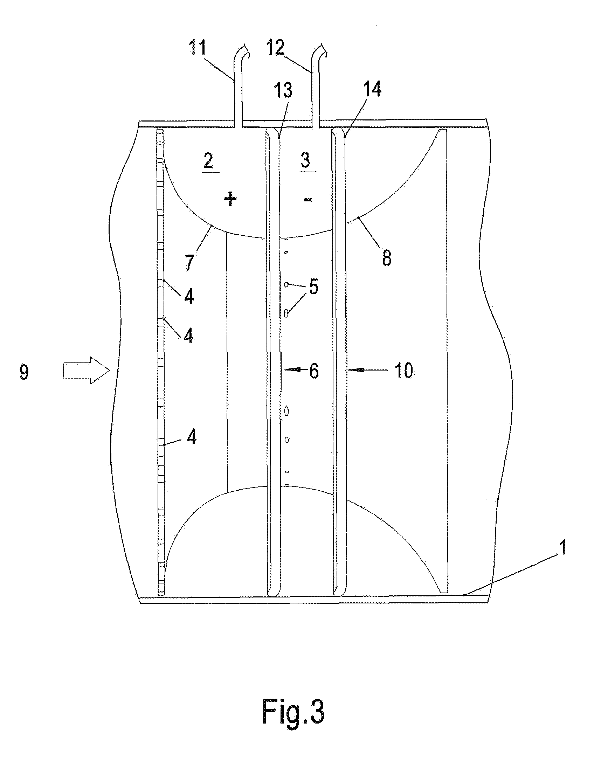

In Figur 3 ist die erfindungsgemäße Sensoreinrichtung im eingeschobenen Zustand dargestellt. Deutlich erkennbar ist, dass die Dichtungen 13, 14 des Ringelementes 6 und des weiteren Ringelementes 10 aufgrund des Kontaktes mit dem Kanal 1 umgebogen sind. Der freie Rand der abströmseitigen Wandung 8 weist ein Untermaß zur Wandung des Kanals 1 auf. Damit dient die freie Kante der abströmseitigen Wandung 8 als eine Art Einführ- und Führungshilfe, so dass auf diese Weise die Sensoreinrichtung problemlos in einen Kanal 1 eingeführt werden kann.

## Patentansprüche

1. Sensoreinrichtung zur Erfassung von Differenzdrücken eines strömenden Mediums in einem Kanal (1) einer klimatechnischen Anlage mit einer anströmseitigen, ringförmigen, zumindest eine Öffnung (4) aufweisenden Kammer (2) und einer in Strömungsrichtung (9) dahinter angeordneten abströmseitigen ringförmigen, zumindest eine Öffnung (5) aufweisenden Kammer (3), wobei die Öffnungen (4, 5) über die an- und abströmseitige Kammer (2, 3) mit einer Mess- und/oder Regelvorrichtung verbunden sind und wobei eine den Strömungsquerschnitt des Kanals (1) um einen Teilbereich verringernde Strömungsbarriere zwischen den Öffnungen (4, 5) angeordnet ist und der verringerte Strömungsquerschnitt geringer ist als der Strömungsquerschnitt zumindest im Bereich der anströmseitigen Öffnung (4), **dadurch gekennzeichnet, dass** die Sensoreinrichtung als aus dem Kanal (1) herausnehmbarer Einschub ausgebildet ist und als Strömungsbarriere ein umlaufendes Ringelement (6) vorgesehen ist, an dessen innerem Ringrand sowohl eine sich in anströmseitiger Richtung erstreckende Wandung (7) als auch eine sich in abströmseitiger Richtung erstreckende Wandung (8) vorgesehen ist, die jeweils zusammen mit dem Ringelement (6) und der Wandung des Kanals (1) und gegebenenfalls mit einem weiteren Element jeweils die an- und die abströmseitige Kammer (2, 3) bilden, wobei in der anströmseitigen Kammer (2) zumindest eine Öffnung (4) im Bereich der nicht an das Ringelement (6) angrenzenden umlaufenden Kante der Wandung (7) angeordnet ist und wobei in der abströmseitigen Kammer (3) zumindest eine Öffnung (5) vorzugsweise im Bereich des geringsten verbleibenden Strömungsquerschnittes angeordnet ist und wobei im eingeschobenen Zustand sowohl der äußere Ringrand des Ringelementes (6) einerseits als auch die nicht an das Ringelement (6) angrenzende umlaufende Kante der Wandung der abströmseitigen Kammer (3) bzw. das weitere Element andererseits gegenüber der Wandung des Kanals (1) abgedichtet sind.

2. Sensoreinrichtung nach dem vorhergehenden Anspruch, **dadurch gekennzeichnet, dass** die anströmseitige Kammer (2) in der nicht an das Ringelement (6) angrenzenden umlaufenden Kante, insbesondere halbkreisförmige ausgebildete, Ausnehmungen als Öffnungen (4) aufweist.

3. Sensoreinrichtung nach einem der vorhergehenden Ansprüche, **dadurch gekennzeichnet, dass** die anströmseitige Wandung (7) in Strömungsrichtung (9) gesehen trichterartig unter Verringerung des freien Strömungsquerschnittes zusammenlaufend ausgebildet ist.

4. Sensoreinrichtung nach einem der vorhergehenden Ansprüche, **dadurch gekennzeichnet, dass** die Kontur der anströmseitigen Wandung (7) gekrümmt ausgebildet ist.

5. Sensoreinrichtung nach einem der vorhergehenden Ansprüche, **dadurch gekennzeichnet, dass** der an den inneren Rand des Ringelementes (6) angrenzende Bereich der abströmseitigen Wandung (8) zumindest in einem Teilbereich trichterartig in Strömungsrichtung (9) auseinanderlaufend ausgebildet ist.

6. Sensoreinrichtung nach einem der vorhergehenden Ansprüche, **dadurch gekennzeichnet, dass** die Kontur der abströmseitigen Wandung (8) gekrümmt ausgebildet ist.

7. Sensoreinrichtung nach einem der vorhergehenden Ansprüche, **dadurch gekennzeichnet, dass** das weitere Element als ein weiteres Ringelement (10) ausgebildet ist, das zusammen mit dem Ringelement (6), der Wandung des Kanals (1) und einem Teilbereich der abströmseitigen Wandung (8) die abströmseitige Kammer (3) bildet.
